(19) Europäisches Patentamt
European Patent Office
Office européen des brevets

(11) **EP 2 944 514 A1**

(12) **DEMANDE DE BREVET EUROPEEN**

(43) Date de publication:
**18.11.2015 Bulletin 2015/47**

(51) Int Cl.:
**B60Q 1/14** (2006.01)  **F21S 8/10** (2006.01)
**F21Y 103/00** (2006.01)

(21) Numéro de dépôt: **15165308.6**

(22) Date de dépôt: **28.04.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **13.05.2014 FR 1454236**

(71) Demandeur: **VALEO VISION**
**93012 Bobigny Cedex (FR)**

(72) Inventeurs:
• **Albou, Pierre**
**75013 Paris (FR)**
• **Godbillon, Vincent**
**75011 Paris (FR)**

(54) **SYSTÈME D'ÉCLAIRAGE POUR PROJECTEUR DE VÉHICULE AUTOMOBILE COMPRENANT PLUSIEURS MODULES D'ÉCLAIRAGE**

(57) Ce système (1) comprend des premier et deuxième modules (2, 3). Chaque module (2, 3) comporte des sources de lumière (4) et des moyens optiques (8, 10).

Dans chaque module, les moyens optiques (8, 10) forment, à partir de la lumière émise par les sources (4), une tache lumineuse par source (4), chaque tache ayant une forme de bande lumineuse de forme généralement rectangulaire.

Les taches lumineuses formées par chaque module (2, 3) sont sensiblement parallèles à une direction principale commune à toutes les taches de ce module (2, 3).

Le premier module (2) forme des taches suivant une première direction, et le deuxième module (3) forme des taches suivant une deuxième direction non parallèle à la première.

Fig. 1

EP 2 944 514 A1

**Fig. 5**

**Description**

L'invention concerne les dispositifs d'éclairage tels que les projecteurs pour véhicules automobiles.

Il est connu de prévoir sur un véhicule automobile des fonctions d'éclairage en feux de route et en feux de croisement. La première fournit un éclairage de toute la largeur de la route devant le véhicule. La seconde fournit un éclairage de la voie dans laquelle se trouve le véhicule et un éclairage réduit de la voie située à côté et dans laquelle des véhicules sont susceptibles de venir à contresens. De la sorte, les occupants de ces derniers ne sont pas éblouis. Toutefois, la fonction de feux de croisement dans sa forme la plus habituelle ne permet pas d'éclairer suffisamment loin le bas-côté de la route situé au-delà de cette voie adjacente. Or cela constitue une source de danger. Par exemple, si un piéton situé sur ce bas-côté s'apprête à traverser la route, il ne sera pas visible suffisamment tôt par le conducteur. Pour y remédier, on a proposé une fonction de feu adaptatif qui permet d'éclairer à grande distance et sélectivement certaines parties de la scène située devant le véhicule et en particulier le bas-côté situé au-delà de la voie adjacente. A cette fin, un dispositif d'observation analyse la scène et sélectionne les zones qui doivent être éclairées.

Pour cela, il est connu notamment de découper fictivement cette scène en plusieurs bandes rectangulaires verticales qui sont éclairées sélectivement suivant les parties de la scène que l'on souhaite illuminer (le même type de fonctionnement peut être mis en oeuvre avec une disposition matricielle, c'est-à-dire en colonnes et en lignes, des différentes zones de la scène à éclairer sélectivement). Il est également souhaitable d'éclairer davantage les parties inférieures des bandes que leur partie supérieure.

Un projecteur permettant de mettre en oeuvre ce fonctionnement est présenté dans le document EP-2 278 217. Il comprend plusieurs modules contigus destinés à former les bandes respectives. Chaque module comprend une source de lumière, un réflecteur et une lentille permettant de réaliser une des bandes. Le réflecteur a une forme telle qu'il assure un étalement de la lumière de la source suivant la direction verticale et que la partie inférieure de la bande est plus éclairée que sa partie supérieure.

Mais ce projecteur est encombrant puisqu'il faut juxtaposer autant de modules que de bandes souhaitées.

Un but de l'invention est de pallier cet inconvénient et donc de réduire le volume du dispositif permettant d'éclairer sélectivement différentes zones de la scène visible devant le véhicule.

A cet effet, on prévoit selon l'invention un système d'éclairage pour véhicule automobile **caractérisé en ce** qu'il comprend au moins des premier et deuxième modules d'éclairage, chacun des modules comportant des sources de lumière et des moyens optiques,

dans chacun des modules, les moyens optiques étant agencés de manière à former, à partir de la lumière émise par les sources de lumière, une tache lumineuse par source de lumière, chaque tache ayant une forme de bande lumineuse, notamment de forme généralement rectangulaire,

les taches lumineuses formées par chaque module étant sensiblement parallèles à une direction principale commune à toutes les taches de ce module,

le premier module d'éclairage formant des taches lumineuses suivant une première direction, et le deuxième module d'éclairage formant des taches lumineuses suivant une deuxième direction non parallèle à la première.

Ainsi, dans chaque module, les sources de lumière sont associées aux mêmes moyens optiques. On réduit donc considérablement le volume du dispositif.

De plus, les premier et deuxième modules d'éclairage formant des taches lumineuses suivant des directions principales non parallèles entre elles, l'invention permet d'obtenir une disposition matricielle de la lumière émise par le système d'éclairage, ce qui est particulièrement avantageux pour sélectionner les zones à ne pas éclairer.

Avantageusement, la première direction est perpendiculaire à la deuxième direction. Par exemple, la première direction peut être orientée verticalement et la deuxième direction peut être orientée horizontalement.

Ainsi, les taches lumineuses formées par les premier et deuxième modules s'intersectent suivant des rectangles, ce qui permet de réaliser un maillage efficace de la scène à éclairer sélectivement.

Avantageusement, le système d'éclairage comprend au moins deux premiers modules identiques formant des taches lumineuses suivant la première direction, ces deux premiers modules étant agencés de sorte que les taches formées par un des deux premiers modules soient décalées perpendiculairement à la première direction par rapport aux taches formées par l'autre de ces deux premiers modules.

Avantageusement, le système d'éclairage comprend au moins deux deuxièmes modules identiques forment des taches lumineuses suivant la deuxième direction, ces deux deuxièmes modules étant agencés de sorte que les taches formées par un de ces deux deuxièmes modules soient décalées perpendiculairement à la deuxième direction par rapport aux taches formées par l'autre de ces deux deuxièmes modules.

On s'assure ainsi qu'il ne subsiste aucune zone non éclairée entre deux taches lumineuses créées par un même module.

Avantageusement, les moyens optiques du premier module sont agencés de façon à former, pour chaque source de lumière de ce premier module, une tache lumineuse dont une partie inférieure présente une puissance lumineuse supérieure à celle d'une partie supérieure.

Avantageusement, les moyens optiques du deuxième module sont agencés de façon à former, pour chaque source de lumière de ce deuxième module, une tache lumineuse dont une partie latérale présente une puissance lumineuse supérieure à celle d'une autre partie latérale opposée.

On peut ainsi éclairer préférentiellement certaines zones de la scène.

Avantageusement, le deuxième module est semblable à une image du premier module par une rotation de 90°.

Il n'est ainsi pas nécessaire de concevoir deux modules différents pour former les premier et deuxième modules, ce qui générerait un surcoût.

Avantageusement, les moyens optiques du deuxième module sont agencés de façon à former, pour chaque source de lumière de ce deuxième module, une tache lumineuse dont une partie centrale présente une puissance lumineuse supérieure à celle du reste de la tache.

Avantageusement, les moyens optiques de chaque module comportent un moyen optique de projection sur la route et éventuellement un moyen optique primaire de mise en forme de la tache. Le cas échéant, le moyen optique de projection d'un module est agencé de manière à ce que ce moyen optique de projection projette sur la route les taches lumineuses formées par le moyen optique primaire à partir des sources lumineuses de module de ce module.

En variante, le module peut être dépourvu de moyen optique primaire. Dans ce cas, le moyen optique de projection peut être agencé de manière à ce que ce moyen optique de projection forme lui-même les taches lumineuses à partir des sources de lumière et les projette sur la route.

De préférence, le moyen optique primaire est un réflecteur, notamment ayant une forme générale de portion de cylindre.

Avantageusement, le réflecteur présente, dans un plan perpendiculaire aux génératrices du cylindre, une section conformée de façon à modifier le rapport des dimensions de chaque tache lumineuse par rapport au rapport des dimensions de la source de lumière à partir de laquelle la tache lumineuse est formée, et de façon à modifier la répartition lumineuse dans chaque tache lumineuse par rapport à la répartition lumineuse de la source de lumière à partir de laquelle la tache lumineuse est formée.

Par exemple, le réflecteur peut être agencé pour réfléchir les images de la source de lumière véhiculant une faible intensité lumineuse en haut de la tache et pour réfléchir les images de la source de lumière véhiculant une forte intensité vers le bas de la tache.

Avantageusement, dans chaque module, le réflecteur a une section courbe dont la courbure présente un minimum global, de préférence unique, permettant à la répartition lumineuse dans chaque tache lumineuse de présenter un maximum global unique.

Par exemple, cette section peut-être intégralement courbe tout en présentant un point d'inflexion situé dans le quart inférieur du réflecteur. En-dessous de ce point d'inflexion, le centre de courbure du réflecteur se trouve en avant de celui-ci, au contraire de ce qui se passe au-dessus de ce point. Le cas échéant, la courbure le long de la section présente un unique minimum global localisé au point d'inflexion, auquel la courbure est nulle.

En variante, le réflecteur peut par exemple être agencé pour réfléchir aux extrémités supérieures et inférieures de la tache les images de la source de lumière véhiculant une faible intensité lumineuse et pour réfléchir au centre de la tache les images de la source de lumière véhiculant une forte intensité.

Dans un exemple de cette variante, la section peut être intégralement courbe, et présenter un unique point d'annulation de la courbure, situé à proximité du milieu du réflecteur. Les centres de courbure du réflecteur se trouvent en arrière de celui-ci de part et d'autre du point d'annulation.

Bien entendu, les caractéristiques décrites ci-dessus pour un réflecteur formant des taches s'étendant verticalement sont également applicables, par une rotation à 90°, à un réflecteur formant des taches s'étendant horizontalement.

On peut ainsi sélectionner dans les taches lumineuses une zone dans laquelle l'intensité lumineuse est plus importante que celle dans le reste de la tache lumineuse.

Dans un autre mode de réalisation, le moyen optique primaire d'un module peut comporter une pluralité de guides optiques, chacun étant associé à une source de lumière de ce module, chaque guide présentant par exemple une face interne de réflexion totale de forme généralement elliptique.

Dans une autre variante, le moyen optique primaire d'un module peut comporter une pluralité de lentilles, chacune étant associée à une source de lumière de ce module.

Avantageusement, le moyen optique de projection est une lentille de projection apte à recevoir de la lumière de chaque source.

Avantageusement, dans chaque module, la lentille présente au moins deux foyers, voire une zone focale, et est agencée de manière à ce que l'image formée par la lentille d'un objet placé à l'un de ces foyers soit nette.

On s'assure ainsi que toutes les taches lumineuses formées par les modules présentent des contours nets.

Avantageusement, chaque module comprend un écran formant obstacle à la transmission directe de la lumière des sources du module au moyen optique de projection du module.

Les sources de lumière n'étant pas placées dans une zone focale de la lentille du module auquel elles appartiennent, on évite ainsi la génération de taches lumineuses floues et nuisibles dans la scène à éclairer sélectivement, notamment en direction d'un véhicule venant en contresens.

En variante, le moyen optique de projection peut être un réflecteur ou encore une combinaison d'un ou plusieurs réflecteurs et/ou d'une ou plusieurs lentilles.

Avantageusement, dans chaque module, les sources de lumière comportent chacune une face de forme générale carrée d'émission de lumière.

Ainsi, les taches lumineuses présentent une forme générale rectangulaire.

Avantageusement, dans chaque module, deux côtés de la face d'émission de lumière de chaque source de lumière sont parallèles à un axe optique du moyen optique de projection et à un plan horizontal ou vertical.

Les modules forment ainsi des taches lumineuses soit horizontales, soit verticales, ce qui est particulièrement avantageux.

De préférence, dans chaque module, les sources de lumières comportent chacune une diode électroluminescente.

Ces sources de lumière sont efficaces et relativement peu encombrantes.

Dans un autre mode de réalisation, dans chaque module, les sources de lumière peuvent être chacune formées par une puce d'une diode électroluminescente multipuces.

Avantageusement, les sources de lumière sont disposées successivement, notamment le long d'une ligne. En variante, les sources peuvent être disposées successivement le long d'une courbe, cette courbe correspondant à la courbure de champ du moyen optique de projection.

Avantageusement, le système d'éclairage comporte en outre au moins un module de commande apte à commander de façon sélective l'allumage, l'extinction ou la variation de l'intensité lumineuse émise par chacune des sources de lumière des modules d'éclairage. Le système d'éclairage peut de plus comporter un module de détection, par exemple une caméra, d'un corps à ne pas éclairer dans l'environnement du véhicule, par exemple un véhicule automobile croisé ou suivi. Dans ce cas, le module de commande est apte à commander de façon sélective les sources de lumière des modules d'éclairage en fonction de la détection dudit corps.

On prévoit également selon l'invention un procédé de commande d'un système d'éclairage **caractérisé en ce que,** le système d'éclairage étant tel que défini plus haut, lorsqu'on détecte un corps à ne pas éclairer, par exemple un véhicule automobile, on désactive, dans chaque module d'éclairage, les sources de lumière destinées à former les taches lumineuses d'éclairage de la zone couvrant le corps.

Le système d'éclairage produit ainsi un éclairage sélectif permettant d'éteindre les sources de lumière susceptibles d'éclairer, par exemple, un véhicule circulant en sens inverse sur une voie adjacente.

L'invention sera mieux comprise à la lecture de la description qui va suivre donnée uniquement à titre d'exemple et faite en référence aux dessins dans lesquels :

- la figure 1 est une vue schématique d'un système d'éclairage selon un premier mode de réalisation de l'invention,
- la figure 2 est une vue en perspective schématique d'un module d'éclairage d'un système d'éclairage selon l'invention,
- la figure 3 est un schéma illustrant le trajet de la lumière dans le module de la figure 2,
- la figure 4 illustre la forme de la section d'un réflecteur compris dans des moyens optiques du module d'éclairage de la figure 2,
- les figures 5 et 6 sont des schémas représentant certaines grandeurs utilisées pour le calcul du réflecteur du module de la figure 2,
- la figure 7 est une courbe illustrant l'évolution de l'éclairement normalisé renvoyé par chaque point du réflecteur en fonction de la coordonnée de ce point le long d'un axe parallèle à l'axe du véhicule,
- la figure 8 est une courbe représentant le décalage vertical différentiel de la position d'un point du réflecteur par rapport à un réflecteur à section rectiligne en fonction de l'éclairement renvoyé par ce point,
- les figures 9 et 10 sont deux vues des images des sources produites par le réflecteur et utilisées pour l'optimisation optique d'une lentille comprise dans les moyens optiques du module de la figure 2 dans deux modes de réalisation respectifs de l'optimisation optique de la lentille,
- les figures 11 à 16 montrent les taches lumineuses produites par des systèmes d'éclairage tels que celui de la figure 1, telle qu'elles apparaissent sur un écran disposé devant le véhicule sur sa route,
- la figure 17 est une vue schématique d'un système d'éclairage selon un deuxième mode de réalisation de l'invention, et
- la figure 18 illustre la forme de la section d'un réflecteur compris dans des moyens optiques d'un module du système d'éclairage de la figure 17.

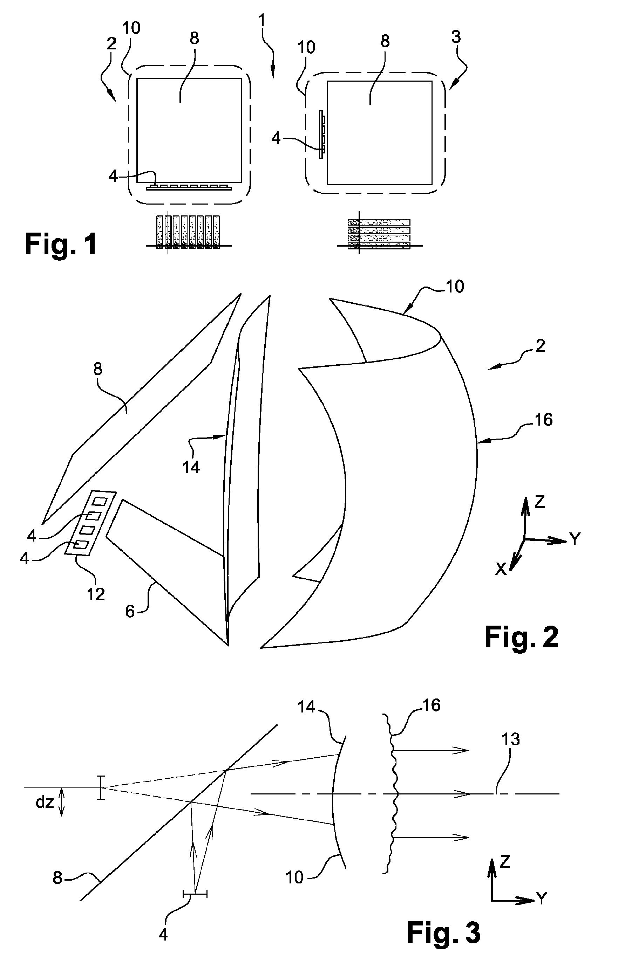

On a illustré aux figures 1 à 4 un système d'éclairage 1 pour un projecteur de véhicule automobile selon un premier mode de réalisation de l'invention. Ce système d'éclairage comprend des premier et deuxième modules d'éclairage 2 et 3. Ces modules d'éclairage 2 et 3 comprennent chacun des sources de lumière 4, un cache ou écran 6, et des moyens optiques 8, 10, comportant ici un moyen optique primaire 8 de mise en forme de la tache et un moyen optique 10 de projection sur la route. Le moyen optique primaire 8 comprend ici un miroir ou réflecteur 8 et le moyen optique de projection 10 comprend ici une lentille 10.

On utilise dans la suite un repère orthogonal XYZ illustré à la figure 2 et dans lequel les axes horizontaux X et Y sont respectivement perpendiculaire et parallèle à la direction de marche du véhicule et l'axe Z est vertical.

On va décrire dans un premier temps les éléments contenus dans le premier module d'éclairage 2.

Les sources de lumière 4 comprennent, dans cet exemple, des diodes électroluminescentes. Elles sont disposées pour produire un éclairage orienté vers le haut avec leur axe optique vertical. Elles présentent ici une face de forme générale carrée d'émission de lumière dans un plan perpendiculaire à cet axe optique. Chaque face d'émission de lumière présente une aire égale par exemple à 1 mm$^2$. Les sources de lumière 4 sont alignées suivant une direction parallèle à l'axe X. Les sources de lumière 4 sont par exemple portées par un circuit imprimé 12 commun à toutes sources. Le nombre de sources peut être varié. Il est supérieur ou égal à trois et le plus élevé possible, chaque source produisant l'une des taches lumineuses formant l'éclairage. Il y a autant de taches lumineuses formées qu'il y a de sources de lumière 4.

On observe donc que les sources de lumière 4 sont disposées de sorte qu'il existe une droite passant par l'ensemble des sources de lumière 4, notamment par l'un des côtés des faces d'émission de lumière de chaque source de lumière 4. Les faces d'émission de lumière de chaque source de lumière 4 présentent deux côtés opposés, et les côtés opposés des faces d'émission de toutes les sources de lumière 4 sont parallèles entre eux. Deux des côtés de chaque face d'émission sont parallèles à un axe optique 13 de la lentille 10 et à un plan horizontal ou vertical.

L'écran 6 est disposé pour interdire à la lumière des sources de lumière 4 d'arriver directement sur la lentille 10. Cet écran 6 forme ainsi obstacle à la transmission directe de la lumière des sources de lumière 4 du module d'éclairage 2 au moyen optique de projection 10 du module 2.

Cette dernière présente une surface arrière 14 et une surface avant 16 dénommées ainsi par référence au sens du trajet de la lumière des sources de lumière 4. Comme illustré à la figure 3, une partie au moins de la lumière de chaque source de lumière 4 est réfléchie par le réflecteur 8 en direction de la surface arrière 14 puis sort de la lentille 10 par la surface avant 16 sous la forme de rayons parallèles entre eux et à l'axe optique 13 de la lentille 10, lui-même parallèle à l'axe Y. Le premier module d'éclairage 2 forme ainsi des taches lumineuses en sortie de la lentille 10. Chaque tache lumineuse est de forme de bande lumineuse, notamment de forme générale rectangulaire, présentant deux grands côtés, appelés les hauteurs, et deux petits côtés, appelés les largeurs.

La lentille 10 est ainsi agencée de manière à ce que cette lentille 10 projette sur la route les taches lumineuses formées par le réflecteur 8 à partir des sources lumineuses 4 du module d'éclairage 2. On pourra cependant prévoir que selon une variante de l'invention, dans laquelle le module d'éclairage 2 est dépourvu de moyen optique primaire 8, le moyen optique de projection 10 est agencé de manière à ce que ce moyen optique 10 forme lui-même les taches lumineuses à partir des sources de lumière 4 et les projette sur la route.

Le deuxième module d'éclairage 3 correspond au premier module 2, sauf en ce qu'il est tourné de 90° autour de l'axe Y, ici dans le sens horaire, par rapport au premier module 2. Ce deuxième module 3 est donc semblable à une image du premier module 2 par une rotation de 90°. En particulier, les sources de lumière 4 sont alignées suivant une direction parallèle à l'axe Z. On peut prévoir que le deuxième module d'éclairage 3 comporte un nombre différent de sources de lumière 4 par rapport au premier module d'éclairage 2.

Dans le présent exemple, les taches lumineuses formées par un même module d'éclairage 2 ou 3 sont identiques entre elles. En général, les taches lumineuses sont espacées, du fait que les sources de lumière 4 formant ces taches lumineuses sont elles-mêmes espacées. Pour éviter l'espacement des taches lumineuses, on peut prévoir que le système d'éclairage 1 comporte deux premiers modules 2 identiques formant des taches lumineuses verticales, ces deux premiers modules 2 étant agencés de sorte que les taches formées par un des deux premiers modules soient décalées horizontalement par rapport aux taches formées par l'autre de ces deux premiers modules, et deux deuxièmes modules 3 identiques formant des taches lumineuses horizontales, ces deux deuxièmes modules 3 étant agencés de sorte que les taches formées par un de ces deux deuxièmes modules soient décalées verticalement par rapport aux taches formées par l'autre de ces deux deuxièmes modules. Les modules formant doublon n'ont pas été représentés pour des raisons de clarté des figures.

Dans chaque module d'éclairage 2, 3, la surface du réflecteur 8 exposée à la lumière des sources de lumière 4 a une forme de portion de cylindre, les génératrices du cylindre étant parallèles à la direction d'alignement des sources de lumière 4.

Dans chaque module d'éclairage 2, 3, la lentille 10 recevant de la lumière provenant de toutes les sources de lumière 4, cette lentille 10 est optimisée optiquement afin que les taches lumineuses formant les images des sources de lumière 4 aient des bords les plus nets possible. On verra plus loin de quelle façon cette optimisation est réalisée.

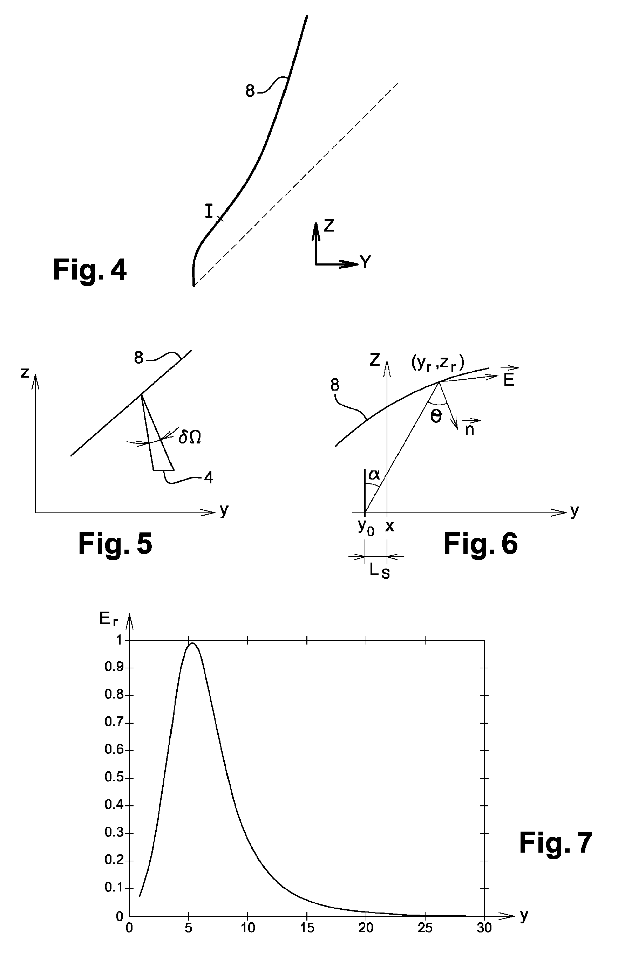

De plus, sachant que la lentille 10 est commune à toutes les sources de lumière 4 et que ces dernières ont de préférence de petites dimensions, réaliser le réflecteur 8 sous la forme d'un anamorphoseur ne permet pas d'obtenir de façon simple de bons résultats. C'est la raison pour laquelle on choisit ici de calculer la forme du réflecteur 8 afin qu'il procure des résultats satisfaisants voire optimaux. En particulier, la forme de sa section illustrée à la figure 4 est distincte d'un segment de droite et d'une conique.

Cette forme est calculée pour remplir deux fonctions.

La première fonction consiste à réaliser un étalement de l'image de chaque source de lumière 4 afin que le réflecteur 8 produise une image rectangulaire d'une source de lumière 4 présentant une face d'émission de lumière carrée. Cet étalement est réalisé suivant la direction verticale dans le premier module d'éclairage 2 et selon la direction horizontale parallèle à l'axe X dans le deuxième module d'éclairage 3. Le premier module d'éclairage 2 forme ainsi des taches lumineuses suivant une première direction verticale, et le deuxième module d'éclairage 3 forme des taches lumineuses suivant une deuxième direction horizontale.

La deuxième fonction consiste à répartir la puissance lumineuse provenant des sources de lumière 4 de façon à fournir davantage de puissance lumineuse dans certaines zones des taches lumineuses.

A cet effet, le réflecteur a une section courbe dont la courbure présente un minimum global, de préférence unique, permettant à la répartition lumineuse dans chaque tache lumineuse de présenter un maximum global unique. Par exemple, cette section peut être intégralement courbe tout en présentant un point d'inflexion situé dans le quart inférieur du réflecteur. En dessous de ce point d'inflexion, le centre de courbure du réflecteur se trouve en avant de celui-ci, au contraire de ce qui se passe au-dessus de ce point. Le cas échéant, la courbure le long de la section présente un unique minimum global localisé au point d'inflexion, auquel la courbure est nulle. Ainsi, le réflecteur peut par exemple être agencé pour réfléchir les images de la source de lumière véhiculant une faible intensité lumineuse en haut de la tache et pour réfléchir les images de la source de lumière véhiculant une forte intensité lumineuse vers le bas de la tache.

En variante le réflecteur peut par exemple être agencé pour réfléchir aux extrémités supérieures et inférieures de la taches les images de la source de lumière véhiculant une faible intensité lumineuse et pour réfléchir au centre de la tache les images la source de lumière véhiculant une forte intensité. Dans un exemple de cette variante, la section peut être intégralement courbe, et présenter un unique point d'annulation de la courbure, situé à proximité du milieu du réflecteur. Les centres de courbure du réflecteur se trouvent en arrière de celui-ci de part et d'autre du point d'annulation. Bien entendu, les caractéristiques décrites ci-dessus pour un réflecteur formant des taches s'étendant verticalement sont également applicables, par une rotation à 90°, à un réflecteur formant des taches s'étendant horizontalement.

Dans le cas présent, on répartit la puissance lumineuse de façon à en fournir davantage à la partie basse des taches lumineuses formées par le premier module d'éclairage 2 et au niveau d'une extrémité, gauche ou droite, des taches lumineuses formées par le deuxième module d'éclairage 3. On choisira préférentiellement le côté intérieur, c'est-à-dire le côté droit si le système d'éclairage est monté dans le projecteur gauche du véhicule et le côté gauche si le système d'éclairage est monté dans le projecteur droit du véhicule. On éclaire ainsi efficacement la route dans l'axe de déplacement du véhicule.

Pour calculer la forme de la section du réflecteur 8, on cherche d'abord à déterminer l'évolution de l'éclairement normalisé renvoyé par chaque point du réflecteur en fonction de la coordonnée de ce point le long d'un axe parallèle à l'axe du véhicule. Dans ce qui suit, le calcul est réalisé pour le réflecteur 8 du premier module d'éclairage 2, destiné à former des taches lumineuses verticales, et on sait que celui du deuxième module d'éclairage 3 se déduit de celui du premier par rotation de 90° autour de l'axe optique 13 de la lentille 10.

On part d'une section rectiligne parallèle à l'axe X et orientée à 45° par rapport aux axes Y et Z comme illustré à la figure 3. On considère une source de lumière unique 4 se trouvant au droit de cette section. L'axe Y passe par le plan de la source de lumière 4 et l'axe Z passe par son extrémité avant qui forme donc l'origine O du repère. En référence à la figure 5, en chaque point de la section, on calcule un flux $\delta\Phi = I . \delta\Omega$ où :

- I est l'intensité rayonnée par la source dans la direction du point du réflecteur considéré, et
- $\delta\Omega$ est l'angle solide infinitésimal sous lequel est vue la source depuis le point considéré.

Les valeurs de $\delta\Phi$ sont ramenées entre 0 et 1 par une transformation affine, de la plus faible à la plus forte.

Pour effectuer ce calcul, on met en oeuvre la méthode suivante.

En référence à la figure 6 :

- $E_r$ est l'éclairement produit par la source de lumière 4 au point $(0, y_r, z_r)$ du réflecteur 8. Il s'agit du flux par élément de surface du réflecteur 8 ;
- $E_s$ est l'émittance de la source de lumière 4 qui est supposée lambertienne ;
- $\alpha$ est l'angle formé par rapport à l'axe Z par une droite passant par un point courant de la source de lumière 4 et le point considéré du réflecteur 8 ;
- $\theta$ est l'angle formé par cette droite avec la normale au réflecteur 8 en ce point ;
- r est la distance du point courant de la source de lumière 4 au point considéré sur le réflecteur 8 ;
- h désigne la largeur de la source de lumière 4 suivant l'axe X ;
- $L_s$ est la longueur de la source de lumière 4 suivant l'axe Y ;

- $x_s$ et $y_s$ sont les coordonnées d'un point courant de la source ; et
- $dz(E_r)$ désigne le décalage qu'on souhaite donner suivant la direction de l'axe Z à l'image de la source réfléchie par le point du réflecteur.

On peut donc écrire :

$$E_r = \iint (E_s \cos\alpha \cos\theta / \pi\, r^2)\, dS$$

l'intégrale étant prise sur la source

$$\text{soit } E_r = (E_s /\pi) \iint (\cos\alpha \cos\theta / r^2)\, dx_s\, dy_s$$

l'intégrale étant prise sur $[- h_s / 2 ; h_s / 2] \times [- L_s ; 0]$.
Par ailleurs,

$$\cos\theta = ((y_s - y_r)n_y - z_r\, n_z) / \sqrt{((y_s - y_r)^2 + x_s{}^2 + z_r{}^2)}$$

$$\cos\alpha = z_r / \sqrt{((y_s - y_r)^2 + x_s{}^2 + z_r{}^2)}$$

$$r^2 = (y_s - y_r)^2 + x_s{}^2 + z_r{}^2$$

où $n_y$ et $n_z$ sont les coordonnées non nulles du vecteur unitaire normal au réflecteur au point considéré.
Il en découle que :

$$E_r = (E_s z_r / \pi) \iint (((y_s - y_r)\, n_y - z_r\, n_z) / ((y_s - y_r)^2 + x_s{}^2 + z_r{}^2)\, dx_s\, dy_s$$

Pour le réflecteur plan, les images virtuelles créées en tout point du réflecteur sont de même taille et $E_r$ est donc l'émittance de l'image virtuelle du point $(0, y_r, z_r)$.
On fait remarquer que :

$$\text{Si } y_r = f_y(u) \text{ et } z_r = f_z(u)$$

$$\text{Alors } n_y = f'_z / \sqrt{f'_y{}^2 + f'_z{}^2} \text{ et } n_z = - f'_y / \sqrt{f'_y{}^2 + f'_z{}^2}$$

Et dans le cas du réflecteur plan à 45° :

$$f_y = u + y_0 \text{ et } f_z = u + z_0$$

$y_0$ et $z_0$ étant des constantes et les coordonnées d'un point du réflecteur.
Le symétrique de l'origine du repère par rapport à plan à 45° passant par le point $(y_0 ; z_0)$ se trouve au point $(y_0 - z_0 ; y_0 + z_0)$. Le haut des images virtuelles (donc le bas des images projetées) passe par ce point. $dz(E_r)$ est donc mesuré suivant l'axe $- Z$ depuis ce point.
Prenons $f_y(u) = u$ et considérons un point $(x_r ; y_r)$ du réflecteur.
On a donc $n_y = f'_z / \sqrt{1 + f'_z{}^2}$ et $n_z = -1 / \sqrt{1 + f'_z{}^2}$
Soit $\vec{i}$ un rayon incident au point considéré provenant de O :

$$\vec{\iota} = \frac{1}{\sqrt{u^2 + f_z{}^2}} \text{ x } (u \text{ ; } f_z)$$

La direction du rayon réfléchi est :

$$\vec{r} = \vec{\iota} - 2\,(\vec{\iota}.\vec{n})\,\vec{n}$$

$$\vec{r} = \frac{1}{\sqrt{u^2 + f_z{}^2}} \cdot (u, f_z) - 2 \cdot \frac{u f'_z - f_z}{1 + f'{}_z{}^2} \cdot (f'_z \text{ ; } -1)$$

$$\vec{r} = (r_y(u \text{ ; } f_z \text{ ; } f'_z) \text{ ; } r_z(u \text{ ; } f_z \text{ ; } f'_z))$$

Le rayon virtuel rencontre le plan des images virtuelles du réflecteur à 45° en un point I tel que :

$$I = (y_r \text{ ; } z_r) - \lambda\,\vec{r}$$

et tel que :

$$y_r - \lambda\,r_y = u - \lambda\,r_y = y_0 - z_0$$

si bien que :

$$\lambda = \frac{y_0 - z_0 - u}{r_y}$$

Et le réflecteur déplace l'image comme souhaité si :

$$z_r - \lambda\,r_z = f_z - \frac{y_0 - z_0 - u}{r_y} \cdot r_z = z_0 - y_0 - dz(E_r(u \text{ ; } f_z))$$

Il s'agit d'une équation en u, $f_z$ et $f'_z$. Cette équation différentielle en $f_z$ est soluble numériquement avec comme condition initiale $f_z(y_0) = z_0$ et comme paramètre $y_0$, $z_0$ et $dzE_r$.

On a ainsi illustré à la figure 7 l'évolution de l'éclairement $E_r$ produit par la source de lumière 4 en fonction de la coordonnée le long de l'axe Y du point considéré du réflecteur 8.

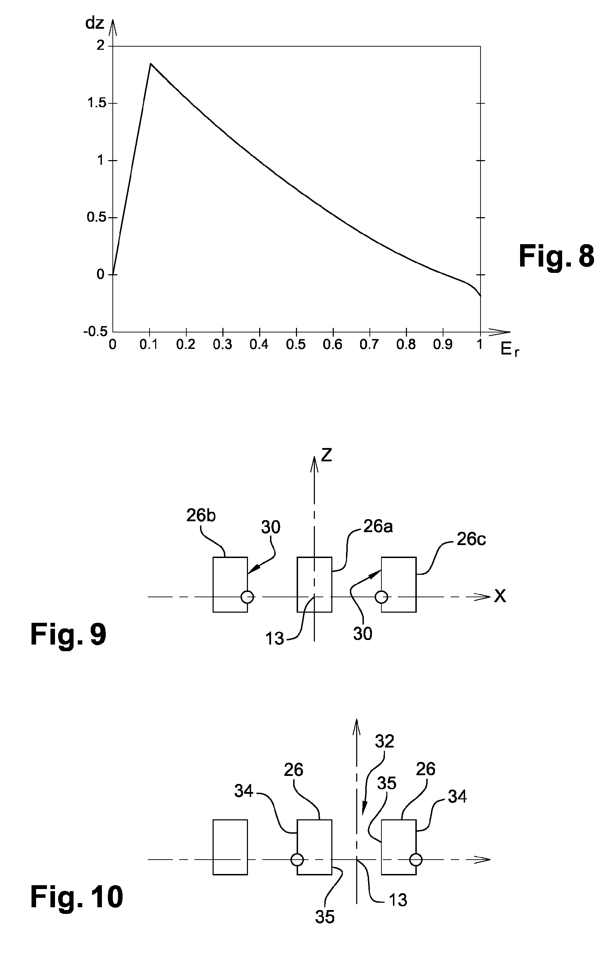

En l'espèce, dans la tache lumineuse correspondant à la source de lumière 4, on cherche à déplacer les images de la source de lumière 4 produites par les différentes parties du réflecteur 8 en fonction du flux lumineux qu'elles véhiculent. Plus précisément, on cherche à faire monter les images véhiculant une faible intensité lumineuse et à faire descendre les images véhiculant une forte intensité. Pour cela, en l'espèce, on détermine arbitrairement quel décalage dz suivant la direction verticale donner aux images de la source de lumière 4 produites par le réflecteur 8 en fonction de la valeur de l'éclairement. On a illustré à la figure 8 l'évolution que l'on choisit ici d'appliquer pour ce décalage dz en fonction de la valeur de l'éclairement $E_r$.

Ensuite, en chaque point considéré du réflecteur 8, on calcule l'orientation que doit avoir la normale au réflecteur 8 afin de produire le décalage souhaité. Une fois que cette orientation a été déterminée pour tous les points du réflecteur 8, la position de chaque point se trouve déterminée sachant que l'on part du bord inférieur du réflecteur 8 qui est commun au réflecteur plan orienté à 45°. On peut donc construire le réflecteur 8 de proche en proche. Ce calcul d'orientation et cette construction peuvent être effectués sans difficulté par un programme informatique.

La section obtenue a la forme illustrée à la figure 4. On voit sur cette figure que le réflecteur 8 a une section courbe dont la courbure présente un minimum global unique permettant à la répartition lumineuse dans chaque tache lumineuse de présenter un maximum global unique. Plus particulièrement, la section illustrée à la figure 4 est intégralement courbe tout en présentant un point d'inflexion I situé dans le quart inférieur du réflecteur 8. En-dessous de ce point I, le centre de courbure du réflecteur 8 se trouve en avant de celui-ci, au contraire de ce qui se passe au-dessus de ce point I. La courbure le long de la section présente un unique minimum global localisé au point I, auquel la courbure est nulle. Le rayon lumineux de la source de lumière 4 réfléchi par le réflecteur 8 en ce point I forme le maximum global dans la répartition lumineuse dans la tache lumineuse formée par cette source de lumière 4.

On réalise ainsi, dans le premier module d'éclairage 2, un étalement vertical des faisceaux des sources de lumière 4, sans anamorphose. De plus, une valeur moyenne d'un flux lumineux dans une moitié supérieure de l'image 24 de chaque source projetée par la lentille est inférieure à une valeur moyenne du flux dans une moitié inférieure de l'image. De même, on réalise dans le deuxième module d'éclairage 3 un étalement horizontal des faisceaux des sources de lumière 4. En d'autres termes, les moyens optiques 8, 10 du premier module 2 sont agencés de façon à former, pour chaque source de lumière 4 de ce premier module 2, une tache lumineuse dont une partie inférieure présente une puissance lumineuse supérieure à celle d'une partie supérieure, et les moyens optiques 8, 10 du deuxième module 3 sont agencés de façon à former, pour chaque source de lumière 4 de ce deuxième module, une tache lumineuse dont une partie latérale présente une puissance lumineuse supérieure à celle d'une autre partie latérale opposée.

Par ailleurs, la lentille 10 est optimisée dans ses deux dioptres pour minimiser les aberrations gênantes. Pour cela, on tient compte des deux ou trois sources les plus proches de l'axe optique 13 de la lentille 10. On a illustré aux figures 9 et 10 deux modes de mise en oeuvre de cette optimisation, dans le cas du premier module d'éclairage 2. Ces figures montrent les images 26 des sources de lumière 4 telles qu'elles sont réfléchies par le réflecteur 8. Il s'agit de taches lumineuses rectangulaires alignées dont la plus grande dimension est mesurée suivant la direction verticale. Les taches lumineuses ne sont pas jointives.

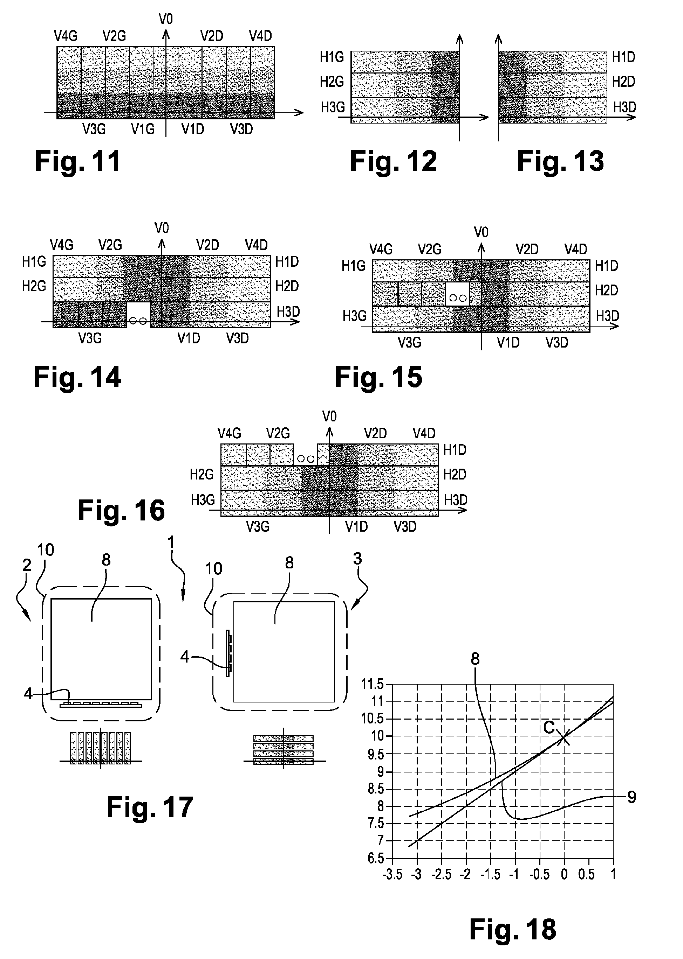

Sur la figure 9, dans un mode de réalisation notamment applicable lorsque les sources de lumière 4 sont en nombre impair, on fait en sorte que l'axe optique 13 de la lentille 10, qui est parallèle à l'axe Y, passe par le plan vertical de symétrie de l'image 26a de la source située au centre de l'alignement. Les images 26b et 26c des deux sources adjacentes sont les plus proches de l'image centrale 26a. La lentille est optimisée afin que les deux bords suivants bénéficient de la netteté maximale : le bord vertical 30 de l'image 26c qui est le plus proche de l'image 26a et le bord vertical 30 de l'image 26b qui est le plus proche de l'image 26a. Dans ce cas, on optimise donc la lentille pour favoriser la netteté des bords verticaux les plus proches de l'axe optique des images des images latérales 26b et 26c. Les images des bords de l'image centrale 26a sont un peu floues ainsi que les bords latéraux extérieurs des images des images 26b et 26c. On peut alors obtenir trois bandes raisonnablement nettes mais présentant une netteté inférieure au cas de la figure 15 expliqué ci-après.

Sur la figure 10, il s'agit d'un autre mode de réalisation. L'axe optique 13 de la lentille 10 passe par le plan vertical de symétrie de l'intervalle 32 situe au centre de l'alignement, entre deux des images 26. Il s'agit donc de deux images adjacentes l'une à l'autre. La lentille est optimisée afin que le bord 35 de chacune de ces deux images 26 qui est le plus éloigné de l'intervalle bénéficie de la netteté maximale. Ce cas est applicable lorsque le faisceau du module s'étend faiblement vers l'intérieur du véhicule. Dans ce cas, les images des bords des images les plus proches de l'axe optique sont un peu floues. Ce cas permet d'obtenir deux taches lumineuses très nettes et s'applique quand on souhaite un faible recouvrement des faisceaux des projecteurs gauche et droit du véhicule lorsque ceux-ci sont conçus conformément à l'invention. Les modules du système d'éclairage selon l'invention permettent notamment d'obtenir des taches lumineuses dont les bords verticaux sont convenablement nets. On évite ainsi un effet de peigne nuisible à l'esthétique.

On prévoit en l'espèce que la face de sortie 16 de la lentille présente des ondulations ayant une profondeur de quelques microns. Ces ondulations ont pour effet de rendre légèrement flous les petits côtés supérieur et inférieur de chaque tache lumineuse afin que la transition lumineuse entre la tache lumineuse et son environnement à ses extrémités verticales s'effectue de la façon la plus douce possible.

Le système d'éclairage 1 comprend en outre au moins un module de commande (non représenté) apte à commander de façon sélective l'allumage, l'extinction ou la variation de l'intensité lumineuse émise par chacune des sources de lumière (4) des modules (2, 3). On verra dans la suite que ce module de commande est intéressant pour le fonctionnement du système d'éclairage.

On va maintenant décrire un procédé de commande du système d'éclairage 1 selon le premier mode de réalisation de l'invention, en faisant ressortir essentiellement comment ce système sélectionne les zones à ne pas éclairer.

En effet, selon ce procédé, lorsqu'on détecte un corps à ne pas éclairer, par exemple un véhicule automobile, on désactive, dans chaque module d'éclairage 2, 3, les sources de lumière 4 destinées à former les taches lumineuses d'éclairage de la zone couvrant le corps.

Plus particulièrement, un dispositif d'observation classique (non représenté), comprenant par exemple des caméras et/ou des capteurs, du véhicule automobile est connecté au système d'éclairage 1. Ce dispositif d'observation est apte à détecter des corps, par exemple des véhicules automobiles roulant en sens inverse sur une voie adjacente, à ne pas éclairer. Ce dispositif d'observation communique alors avec le module de commande du système d'éclairage 1, qui commande une désactivation des sources de lumière 4 des premier et deuxième modules d'éclairage 2, 3 formant les taches lumineuses d'éclairage de la zone couvrant le corps, et ce dynamiquement en suivant le déplacement du corps.

Le système d'éclairage 1 produit ainsi un éclairage sélectif.

On a illustré aux figures 11 à 16 les taches lumineuses formées par le système d'éclairage 1.

Plus précisément, la figure 11 illustre les taches lumineuses formées par le premier module d'éclairage 2, qui est monté dans les projecteurs gauche et droit du véhicule automobile.

La figure 12 illustre les taches lumineuses formée par le deuxième module d'éclairage 3 monté dans le projecteur gauche du véhicule automobile, dans lesquelles les parties droites présentent une puissance lumineuse plus importante qu'en partie gauche. En particulier, ce deuxième module d'éclairage 3 coïncide avec l'image du premier module d'éclairage de la figure 11 par une rotation trigonométrique de 90° autour de l'axe Y.

La figure 13 illustre les taches lumineuses formée par le deuxième module d'éclairage 3 monté dans le projecteur droit du véhicule automobile, dans lesquelles les parties gauches présentent une puissance lumineuse plus importante que les parties droites. En particulier, ce deuxième module d'éclairage 3 coïncide avec l'image du premier module d'éclairage de la figure 11 par une rotation horaire de 90° autour de l'axe Y.

Les figures 14 à 16 illustrent la superposition des taches lumineuses formées par les systèmes d'éclairage équipant les projecteurs gauche et droit du véhicule automobile, ainsi que la mise en oeuvre de la sélection des zones à éclairer devant le véhicule. On éteint systématiquement les sources de lumière 4 destinées à former les taches lumineuses éclairant la zone couvrant un véhicule automobile roulant en sens inverse sur une voie adjacente, et ce dynamiquement en suivant le déplacement du véhicule. On s'assure ainsi de ne pas éblouir le conducteur du véhicule roulant en sens inverse.

On a illustré en figures 17 et 18 un système d'éclairage 1 selon un deuxième mode de réalisation de l'invention, qui diffère du premier mode par la forme du réflecteur 8 compris dans le deuxième module d'éclairage 3. La forme de la section de ce réflecteur 8 est illustré en figure 18. En particulier, la section est intégralement courbe, et présente un unique point C d'annulation de la courbure, situé à proximité du milieu du réflecteur 8. Les centres de courbure du réflecteur 8 se trouvent en arrière de celui-ci de part et d'autre du point C. La forme du réflecteur peut être calculée en utilisant la méthode décrite précédemment. La forme du réflecteur 8 permet ainsi de répartir la puissance lumineuse émise par les sources de lumière 4 de façon à en fournir davantage à la partie centrale des taches lumineuses formées par le deuxième module d'éclairage 3. En d'autres termes, les moyens optiques 8, 10 du deuxième module 3 sont agencés de façon à former, pour chaque source de lumière 4 de ce deuxième module, une tache lumineuse dont une partie centrale présente une puissance lumineuse supérieure à celle du reste de la tache.

Bien entendu, on pourra apporter à l'invention de nombreuses modifications sans sortir du cadre de celle-ci.

Le moyen optique primaire 8 d'un module 2, 3 peut comporter une pluralité de guides optiques, chacun étant associé à une source de lumière 4 de ce module d'éclairage 2, 3, chaque guide présentant par exemple une face interne de réflexion totale de forme généralement elliptique.

Le moyen optique primaire 8 d'un module 2, 3 peut comporter une pluralité de lentilles, chacune étant associée à une source de lumière 4 de ce module d'éclairage 2, 3.

Le moyen optique de projection 10 peut être un réflecteur ou encore une combinaison d'un ou plusieurs réflecteurs et/ou d'une ou plusieurs lentilles.

Dans chaque module, les sources de lumière peuvent être chacune formée par une puce d'une diode électroluminescente multipuce.

Les sources de lumière peuvent être disposées successivement le long d'une courbe, cette courbe correspondant à la courbure du champ moyen optique de projection.

## Revendications

**1.** Système d'éclairage (1) pour véhicule automobile **caractérisé en ce qu'**il comprend au moins des premier et deuxième modules d'éclairage (2, 3), chacun des modules (2, 3) comportant des sources de lumière (4) et des moyens optiques (8, 10),
dans chacun des modules (2, 3), les moyens optiques (8, 10) étant agencés de manière à former, à partir de la lumière émise par les sources de lumière (4), une tache lumineuse par source de lumière (4), chaque tache ayant une forme de bande lumineuse, notamment de forme généralement rectangulaire,
les taches lumineuses formées par chaque module (2, 3) étant sensiblement parallèles à une direction principale commune à toutes les taches de ce module (2, 3),
le premier module d'éclairage (2) formant des taches lumineuses suivant une première direction, et le deuxième module d'éclairage (3) formant des taches lumineuses suivant une deuxième direction non parallèle à la première.

**2.** Système d'éclairage (1) selon la revendication 1, dans lequel la première direction est perpendiculaire à la deuxième direction.

**3.** Système d'éclairage (1) selon l'une quelconque des revendications précédentes, comprenant au moins deux premiers modules (2) identiques formant des taches lumineuses suivant la première direction, ces deux premiers modules (2) étant agencés de sorte que les taches formées par un des deux premiers modules (2) soient décalées perpendiculairement à la première direction par rapport aux taches formées par l'autre de ces deux premiers modules (2).

**4.** Système d'éclairage (1) selon l'une quelconque des revendications précédentes, dans lequel les moyens optiques (8, 10) du premier module (2) sont agencés de façon à former, pour chaque source de lumière (4) de ce premier module, une tache lumineuse dont une partie inférieure présente une puissance lumineuse supérieure à celle d'une partie supérieure.

**5.** Système d'éclairage (1) selon la revendication précédente, dans lequel le deuxième module (3) est semblable à une image du premier module (2) par une rotation de 90°.

**6.** Système d'éclairage (1) selon la revendication 4, dans lequel les moyens optiques (8, 10) du deuxième module (3) sont agencés de façon à former, pour chaque source de lumière (4) de ce deuxième module, une tache lumineuse dont une partie centrale présente une puissance lumineuse supérieure à celle du reste de la tache.

**7.** Système d'éclairage (1) selon l'une des revendications précédentes, dans lequel les moyens optiques (8, 10) de chaque module comportent un moyen optique (10) de projection sur la route et éventuellement un moyen optique primaire (8) de mise en forme de la tache.

**8.** Système d'éclairage (1) selon la revendication 9, dans lequel le moyen optique primaire (8) est un réflecteur, notamment ayant une forme générale de portion de cylindre.

**9.** Système d'éclairage (1) selon l'une des revendications 7 à 8, dans lequel le moyen optique de projection (10) est une lentille de projection (10) apte à recevoir de la lumière de chaque source (4).

**10.** Système d'éclairage (1) selon l'une quelconque des revendications précédentes, dans lequel dans chaque module (2, 3), les sources de lumières (4) comportent chacune une diode électroluminescente.

**11.** Système d'éclairage (1) selon l'une quelconque des revendications précédentes, le système comportant en outre au moins un module de commande apte à commander de façon sélective l'allumage, l'extinction ou la variation de l'intensité lumineuse émise par chacune des sources de lumière (4) des modules d'éclairage (2, 3).

**12.** Procédé de commande d'un système d'éclairage (1) **caractérisé en ce que**, le système d'éclairage (1) étant selon l'une quelconque des revendications 1 à 11, lorsqu'on détecte un corps à ne pas éclairer, par exemple un véhicule automobile, on désactive, dans chaque module d'éclairage (2, 3), les sources de lumière (4) destinées à former les taches lumineuses d'éclairage de la zone couvrant le corps.

**Fig. 1**

**Fig. 2**

**Fig. 3**

Fig. 4

Fig. 5

Fig. 6

Fig. 7

**Fig. 8**

**Fig. 9**

**Fig. 10**

Fig. 11

Fig. 12

Fig. 13

Fig. 14

Fig. 15

Fig. 16

Fig. 17

Fig. 18

Europäisches
Patentamt

European
Patent Office

Office européen
des brevets

**RAPPORT DE RECHERCHE EUROPEENNE**

Numéro de la demande

EP 15 16 5308

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 532 950 A1 (KOITO MFG CO LTD [JP]) 12 décembre 2012 (2012-12-12) | 1-3,7, 9-12 | INV. B60Q1/14 |
| Y | * revendications 1-8; figures 1-5c * | 4,6,8 | F21S8/10 F21Y103/00 |
| Y,D | EP 2 278 217 A1 (VALEO VISION [FR]) 26 janvier 2011 (2011-01-26) | 4,6,8 | |
| A | * revendications 1,4,5,9-11,16; figures 1-12 * | 1,3,7, 9-12 | |
| A | FR 2 991 251 A1 (VALEO VISION [FR]) 6 décembre 2013 (2013-12-06) * abrégé; figures 1-3 * | 1,3,7-12 | |
| A | EP 2 607 165 A1 (VALEO VISION [FR]) 26 juin 2013 (2013-06-26) * abrégé; figures 1-7 * | 1-12 | |
| A | DE 10 2012 108309 A1 (HELLA KGAA HUECK & CO [DE]) 13 mars 2014 (2014-03-13) * abrégé; figures 1-11 * | 1-12 | |
| A | DE 10 2007 052746 A1 (HELLA KGAA HUECK & CO [DE]) 7 mai 2009 (2009-05-07) * revendications 1, 9, 10; figures 1,2 * | 1,6,7, 9-12 | DOMAINES TECHNIQUES RECHERCHES (IPC) B60Q F21S F21Y |
| A | EP 2 500 628 A2 (STANLEY ELECTRIC CO LTD [JP]) 19 septembre 2012 (2012-09-19) * abrégé; figures 3-5a * | 1,4,7-12 | |

Le présent rapport a été établi pour toutes les revendications

| Lieu de la recherche | Date d'achèvement de la recherche | Examinateur |
|---|---|---|
| Munich | 1 juin 2015 | Giraud, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 5308

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-06-2015

| Document brevet cité au rapport de recherche | | Date de publication | Membre(s) de la famille de brevet(s) | | Date de publication |
|---|---|---|---|---|---|
| EP 2532950 | A1 | 12-12-2012 | CN<br>EP<br>JP | 102815256 A<br>2532950 A1<br>2012256551 A | 12-12-2012<br>12-12-2012<br>27-12-2012 |
| EP 2278217 | A1 | 26-01-2011 | EP<br>FR<br>JP | 2278217 A1<br>2948439 A1<br>2011029183 A | 26-01-2011<br>28-01-2011<br>10-02-2011 |
| FR 2991251 | A1 | 06-12-2013 | EP<br>FR<br>WO | 2856009 A1<br>2991251 A1<br>2013182573 A1 | 08-04-2015<br>06-12-2013<br>12-12-2013 |
| EP 2607165 | A1 | 26-06-2013 | EP<br>FR<br>JP | 2607165 A1<br>2984457 A1<br>2013127968 A | 26-06-2013<br>21-06-2013<br>27-06-2013 |
| DE 102012108309 | A1 | 13-03-2014 | CN<br>DE<br>WO | 104602961 A<br>102012108309 A1<br>2014037320 A1 | 06-05-2015<br>13-03-2014<br>13-03-2014 |
| DE 102007052746 | A1 | 07-05-2009 | DE<br>EP<br>WO | 102007052746 A1<br>2210037 A1<br>2009059990 A1 | 07-05-2009<br>28-07-2010<br>14-05-2009 |
| EP 2500628 | A2 | 19-09-2012 | EP<br>US | 2500628 A2<br>2012236561 A1 | 19-09-2012<br>20-09-2012 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2278217 A